# EUROPÄISCHE PATENTANMELDUNG

(11) **EP 2 784 289 A1**
(43) Veröffentlichungstag der Anmeldung: **01.10.2014**
(21) Anmeldenummer: 13161141.0
(22) Anmeldetag: 26.03.2013
(51) Int. Cl.: F02C 6/16, H02J 15/00

(54) **Erdgasspeichersystem mit Wärmespeicher**

(71) Anmelder: Siemens Aktiengesellschaft, 80333 München (DE)
(72) Erfinder: Brunhuber, Christian, 91275 Auerbach (DE); Reckels, Udo, 41464 Neuss (DE); Zimmermann, Gerhard, 91315 Höchstadt/Aisch (DE)

(57) **Zusammenfassung**

Die Erfindung betrifft ein Erdgassystem (1), umfassend ein als Erdgasspeicher ausgebildetes Behältnis (10), einen mit einem Wärmespeichermedium (25) versehenen Wärmespeicher (20), sowie einen elektrisch angetriebenen Kompressor (30) und einen Expander (35), wobei der Kompressor (30) mit dem als Erdgasspeicher ausgebildeten Behältnis (10) über eine Zuleitung (40) fluidtechnisch verschaltet ist, und wobei der Expander (35) mit dem als Erdgasspeicher ausgebildeten Behältnis (10) über eine Ableitung (45) fluidtechnisch verschaltet ist, und wobei die Zuleitung (40) und die Ableitung (45) mit dem Wärmespeicher (20) wärmetechnisch gekoppelt sind.

## Beschreibung

Die vorliegende Erfindung betrifft ein Erdgassystem, welches die zeitliche Zwischenspeicherung von elektrischer Energie ermöglicht. Dieses Erdgassystem weist ein als Erdgasspeicher ausgebildetes Behältnis, einen mit einem Wärmespeichermedium versehenen Wärmespeicher, sowie einen elektrisch angetriebenen Kompressor sowie auch einen Expander auf. Weiterhin betrifft die vorliegende Erfindung ein Verfahren zum Betrieb eines solchen Erdgassystems.

Aufgrund des stetig wachsenden Anteils fluktuierender, erneuerbarer Energien in den Stromübertragungsnetzen ergibt sich die Notwendigkeit zur zeitlichen Zwischenspeicherung von elektrischer Energie, um sowohl einerseits bei Angebot von Überschussstrom die vorliegende elektrische Energie einer Nutzung zuzuführen, wie auch andererseits bei geringem Stromangebot, die so zwischengespeicherte Energie mittels entsprechender Rückverstromungsverfahren den öffentlichen Stromübertragungsnetzen wiederum zur Verfügung stellen zu können. Diese Zwischenspeicherung hat aufgrund der zur Verfügung zu stellenden Energiemengen in kraftwerkstechnischem Maßstab zu erfolgen.

Um die erforderliche Zwischenspeicherung von elektrischer Energie in kraftwerkstechnischem Maßstab ermöglichen zu können, werden heutzutage in erster Linie zwei Technologien diskutiert. Die Zwischenspeicherung der elektrischen Energie mittels Pumpspeicherkraftwerken erfordert eine geeignete geologische Topographie, um die für die Pumpspeicherkraftwerke notwendigen Wasserreservoirs in unterschiedlichen geologischen Höhen anordnen zu können. Aufgrund dieser Anforderung eignen sich Pumpspeicherkraftwerke aber in zahlreichen Regionen der Erde nicht für einen wirtschaftlichen Betrieb. Diesen topographischen Nachteil kann man jedoch durch ein Druckluft-Speicherkraftwerk weitgehend vermeiden, wobei aber die Technologie der Druckluft-Speicherkraftwerke sich derzeitig noch nicht ausreichend in der Praxis bewährt hat. Derzeit sind etwa in Deutschland lediglich zwei Druckluft-Speicherkraftwerke in Betrieb, die sich noch in der frühen Erprobungsphase befinden.

Sowohl Pumpspeicherkraftwerke als auch Druckluft-Speicherkraftwerke weisen den Nachteil auf, dass ihre technischen Funktionsbestandteile eigens hergestellt sowie zu einem funktionierenden Kraftwerk miteinander verschaltet werden müssen. Beide Formen der Kraftwerke können im Wesentlichen nicht auf bereits bestehende kraftwerkstechnische Infrastruktur zurückgreifen, so dass ihre Bereitstellung vor allem in der Investitionsphase sehr kostspielig ist.

Insofern stellt es sich als technisches Erfordernis dar, eine Energiespeicherung von elektrischer Energie in kraftwerkstechnischem Maßstab zu ermöglichen, welche die oben im Stand der Technik beschriebenen Nachteile vermeiden kann. Insbesondere stellt es sich als technisch wünschenswert dar, dass für die Speicherung von elektrischer Energie auf bereits bestehende kraftwerkstechnische Infrastruktur zurückgegriffen werden kann. Dadurch ließen sich sowohl Investitionskosten sowie auch Betriebs- und Wartungskosten signifikant vermindern.

Diese technischen Probleme können in erfindungsgemäßem Sinn durch ein Erdgassystem gemäß Anspruch 1 sowie durch ein Verfahren zum Betreiben eines solchen Erdgassystems gemäß Verfahrensanspruch 13 gelöst werden.

Insbesondere werden diese technische Probleme durch ein Erdgassystem gelöst, umfassend ein als Erdgasspeicher ausgebildetes Behältnis, einen mit einem Wärmespeichermedium versehenen Wärmespeicher, sowie einen elektrisch angetriebenen Kompressor und einen Expander, wobei der Kompressor mit dem als Erdgasspeicher ausgebildeten Behältnis über eine Zuleitung fluidtechnisch verschaltet ist, und wobei der Expander mit dem als Erdgasspeicher ausgebildeten Behältnis über eine Ableitung fluidtechnisch verschaltet ist, und wobei die Zuleitung und die Ableitung mit dem Wärmespeicher wärmetechnisch gekoppelt sind.

Ebenso wird die der Erfindung zugrundeliegende Aufgabe durch ein Verfahren zum Betrieb eines solchen vorab wie auch nachfolgend beschriebenen Erdgassystems gelöst, welches mit einem Erdgasleitungsnetz betriebsgemäß verschaltet ist, wobei das Verfahren die folgenden Schritte umfasst:
- Betreiben des Kompressors und Zuleiten von Erdgas aus dem Erdgasleitungsnetz an das als Erdgasspeicher ausgebildete Behältnis;
- Übertragen von bei der Kompression erzeugter Wärme zur zeitlichen Zwischenspeicherung an den Wärmespeicher;
- Abrufen von Wärme aus dem Wärmespeicher und Übertragen dieser Wärme auf aus dem als Erdgasspeicher ausgebildeten Behältnis abgeleitetes Erdgas;
- Betreiben des Expanders und Zuleiten des erwärmten Erdgases an das Erdgasleitungsnetz.

Hierbei ist darauf hinzuweisen, dass der erfindungsgemäße Expander derart ausgebildet ist, dass er bei Betrieb elektrische Energie erzeugen kann, die im Sinne einer Rückverstromung wieder den Stromübertragungsnetzen zur Verfügung gestellt werden kann. Bevorzugt weist der Expander eine Welle auf, die mit einem geeigneten Generator mechanisch wechselwirkt, so dass bei Betrieb des Expanders mittels des Generators elektrische Energie erzeugt werden kann.

Weiterhin ist darauf hinzuweisen, dass das als Erdgasspeicher ausgebildete Behältnis sowohl als technisch angefertiger Gegenstand wie auch durch eine geologische Formation ausgebildet sein kann. Insbesondere kann der Erdgasspeicher als Kaverne oder Salzstock ausgebildet sein, in welchen Erdgas weitgehend verlustfrei zwischengespeichert werden kann. Weitere geologische Formationen wie etwa ein Porenspeicher sind ebenfalls möglich. Aufgrund der typischerweise vorliegenden Abmessungen derartiger geologischer Erdgasspeicher, kann in dem erfindungsgemäß als Erdgasspeicher ausgebildeten Behältnis eine verhältnismäßig große Menge an Energie zwischengespeichert werden. Zudem sind derartige Erdgasspeicher über Tage im Normalfall kaum sichtbar, so dass diese eine gute Akzeptanz in der Öffentlichkeit erfahren.

Die Grundidee der vorliegenden Erfindung bezieht sich auf eine geeignete Verschaltung eines zur Zwischenspeicherung von Erdgas vorgesehenen Behältnisses mit einem Wärmespeicher, in welchem thermische Energie zeitlich zwischengespeichert werden kann, die bei der Kompression von Erdgas etwa aus einem Erdgasleitungsnetz, gewonnen wird. Die Kompression des Erdgases zur Zuleitung an das als Erdgasspeicher ausgebildete Behältnis erfolgt mittels des elektrisch betriebenen Kompressors, bevorzugt unter Nutzung von elektrischer Energie aus den Stromübertragungsnetzen bei Vorherrschen von Überschussstrom. Das aus bspw. dem Erdgasleitungsnetz entnommene Erdgas wird folglich durch Nutzung von elektrischer Energie mittels des Kompressors auf ein höheres Druckniveau angehoben, auf welchem es in dem als Erdgasspeicher ausgebildeten Behältnis zwischengespeichert wird. Die dabei frei werdende Kompressionswärme kann dem Wärmespeicher zur zeitlichen Zwischenspeicherung zugeführt werden.

Wird nun bei Nachfrage von elektrischer Energie der Erdgasspeicher über einen Expander entspannt und wiederum bspw. dem Erdgasleitungsnetz zugeführt, kann die Wärme in dem Wärmespeicher dazu benutzt werden, das sich während der Expansion stark abkühlende Erdgas mit zusätzlicher thermischer Energie zu konditionieren. Wird das so entspannte Erdgas bspw. dem Erdgasleitungsnetz zugeführt, kann dies bei einem Temperaturniveau erfolgen, welches im Wesentlichen unkritisch für die Zuführung in das Erdgasleitungsnetz ist. Insbesondere kann die Festphasebildung von Bestandteilen des Erdgases vermieden werden.

Die Grundidee der vorliegenden Erfindung vermag anders als bspw. die aus dem Stand der Technik bekannten Druckluft-Speicherkraftwerke auf eine bereits bestehende Infrastruktur, nämlich die Erdgasinfrastruktur, zurückzugreifen, um elektrische Energie etwa bei Angebot von Überschussstrom zeitlich zwischenzuspeichern. Gleichzeitig bleibt die originäre Funktion des Erdgasspeichers erhalten, da nämlich für einen zeitlich späteren Gebrauch, das Erdgas auch als Wertstoff zwischengespeichert wird.

Insofern ist es also möglich, einer bereits zur Erdgasspeicherung vorhandenen Infrastruktur durch Nachrüstung mit einem geeigneten Kompressor, Expander sowie Wärmespeicher ebenfalls eine Zwischenspeicherung von elektrischer Energie aufzurüsten. Dabei stellt es sich als besonders vorteilhaft dar, dass diese elektrische Energie durch Ausspeichern von Erdgas aus dem als Erdgasspeicher ausgebildeten Behältnis insbesondere dann erfolgt, wenn eine erhöhte Nachfrage an elektrischer Energie an den Stromübertragungsnetzen ohnehin vorliegt. Zu einem solchen Zeitpunkt wird jedoch typischerweise auch vermehrt Erdgas als Wertstoff (Brennstoff) durch die Erdgasverbraucher, insbesondere durch die kraftwerkstechnischen Erdgasverbraucher, nachgefragt. Die Bereitstellung von Strom mittels des erfindungsgemäßen Expanders erfolgt also zu einem Zeitpunkt, zu welchem auch mittels weiterer durch Erdgas betriebener kraftwerkstechnischer Anlagen elektrische Energie erzeugt wird und in Stromübertragungsnetzen bereitgestellt werden soll. Aufgrund dieser zeitlichen Koinzidenz ergeben sich typischerweise auch keine Konflikte bei Betrieb des als Erdgasspeicher ausgebildeten Behältnisses in Bezug auf seine Funktion als Zwischenspeicher für den Wertstoff Erdgas wie auch in seiner Funktion für die Zwischenspeicherung von physikalischer Energie (Druck), die mittels des Expanders in dem Rückverstromungsverfahren in elektrische Energie umgesetzt werden kann.

Erfindungsgemäß erlaubt der Wärmespeicher zudem, die bei der Kompression von Erdgas anfallende thermische Energie zeitlich zwischenzuspeichern, um sie zu einem Zeitpunkt wiederum dem Erdgas zur Verfügung zu stellen, wenn dieses über den Expander entspannt wird. Die Zuführung der thermischen Energie aus dem Wärmespeicher kann an unterschiedlichen Orten des Ergassystems erfolgen. Sie kann einerseits bereits vor Entspannung des Erdgases über den Expander erfolgen, wie auch danach, oder auch bevorzugt während der Expansion. So eignen sich insbesondere mehrstufige Expander für die Entspannung des Erdgases, wobei zwischen einzelnen Stufen die thermische Energie aus dem Wärmespeicher dem Erdgas zugeführt werden kann.

Entsprechend einer besonders bevorzugten Ausführungsform des erfindungsgemäßen Erdgassystems umfasst dieses wenigstens einen Anschluss, welcher dazu ausgebildet ist, eine fluidtechnische Verbindung zwischen dem Erdgassystem und einem Erdgasleitungsnetz herzustellen. Insbesondere weist der Anschluss eine Zuführleitung auf, über welche dem Kompressor Erdgas aus dem Erdgasleitungsnetz zugeführt werden kann, sowie eine Abführleitung, über welche aus dem Expander abgeführtes Erdgas dem Erdgasleitungsnetz wieder zugeführt werden kann. Folglich vermag das erfindungsgemäße Erdgassystem leicht an eine bereits bestehende Leitungsinfrastruktur des Erdgasleitungsnetzes angeschlossen zu werden, um das Speichermedium, Erdgas, daraus zu entnehmen.

Gemäß einer weiteren vorteilhaften Ausführungsform des erfindungsgemäßen Erdgassystems ist der Kompressor als wenigstens eine, mittels eines Elektromotors betriebene Turbine ausgebildet. Derartige Turbinen sind aus kraftwerkstechnischen Anwendungen sowie großtechnischen Anwendungen bereits bekannt und eigenen sich besonders gut, die vorliegend erforderlichen Drücke bereit zu stellen.

Gemäß einer weiteren Ausführungsform kann auch der Expander als eine mit einem Generator zur Stromerzeugung wechselwirkende Turbine ausgebildet sein. Demgemäß kann bei Betrieb des Expanders elektrische Energie gewonnen werden, welche an Stromübertragungsnetze geliefert werden kann. Der Expander erfüllt damit nicht nur die Funktion einer Druckverminderungseinheit, mittels welcher der Druck des Erdgases von dem Druckniveau in dem als Erdgasspeicher ausgebildeten Behältnisses auf das Druckniveau des Erdgases in bspw. dem Erdgasleitungsnetz reduziert wird, sondern gleichzeitig auch die Funktion einer Stromerzeugungseinheit. Diese Doppelfunktion gewährleistet einen besonders effizienten wie auch flexiblen Einsatz dieses Bauteils.

Entsprechend eines weiteren vorteilhaften Aspektes des erfindungsgemäßen Erdgassystems sind der Kompressor und der Expander durch eine Turbine ausgebildet, die in unterschiedlichen Richtungen betrieben werden kann, wobei der den Kompressor antreibende Elektromotor auch als Generator für den Betrieb als Expander arbeiten kann. Ausführungsgemäß werden also die Funktionen eines Kompressors und eines Expanders in einem einzigen Bauteil vereinigt. Dies erfordert einerseits weniger Raumbedarf, und gewährleistet eine höhere Flexibilität wie auch deutlich verminderte Investitions- und Betriebskosten.

Gemäß einer besonders bevorzugten Ausführungsform des Erdgassystems ist das als Erdgasspeicher ausgebildete Behältnis ein Druckbehältnis, welches mit Erdgas bei einem Überdruck beladen werden kann, insbesondere bei einem Überdruck, welcher größer ist als der Druck in einem herkömmlichen Erdgasleitungsnetz, bevorzugt bei einem Überdruck von wenigstens 100 bar, wenigstens 150 bar oder besonders bevorzugt bei einem Überdruck von wenigstens 200 bar. Diese Druckstufen eignen sich besonders in Verbindung mit einem Erdgasleitungsnetz, in welchem das Erdgas typischerweise bei einem Druckniveau zwischen 70 und 80 bar bevorratet und geleitet wird. Die Kompression von dem aus einem solchen Erdgasleitungsnetz entnommenen Erdgas auf den besonders bevorzugten Überdruck von etwa 150 bar bis 200 bar lässt insbesondere Kompressionsabwärme auf einem Temperaturniveau von etwa 90 bis 120 °C frei werden. Durch eine Wärmeübertragung an das mittels des Expanders entspannte Erdgas ist das Temperaturniveau von 80 bis 100 °C ausreichend, um eine technisch nicht gewünschte Abkühlung des Erdgases beim Expandieren unter kritische Temperaturschwellen zu vermeiden. Insofern kann die Wärme, die bei Kompression des Erdgases ausführungsgemäß auf einem Temperaturniveau von zwischen 90 und 120 °C frei wird, ohne weitere technische Vorkehrungen wiederum auf das Erdgas übertragen, welches mittels des Expanders entspannt wird.

Entsprechend eines weiteren vorteilhaften Aspekts der Erfindung ist vorgesehen, dass ein Wärmetauscher weiterhin vorgesehen ist, welcher mit der Zuleitung und/oder der Ableitung wärmetechnisch verschaltet ist, und gleichzeitig mit dem Wärmespeicher wärmetechnisch verschaltet ist. Der ausführungsgemäße Wärmetauscher ermöglicht eine vorteilhafte Flexibilisierung sowie eine bautechnische Vereinfachung der verschalteten Komponenten. Aufgrund des Wärmetauschers kann nämlich bspw. ein direkter Kontakt des Erdgases mit dem Wärmespeichermedium des Wärmespeichers vermieden werden. Zudem kann die Wärme gezielt und dosiert in den Wärmespeicher eingetragen werden.

Gemäß einer alternativen Ausführungsform kann jedoch auch vorgesehen sein, dass die Zuleitung und/oder die Ableitung fluidtechnisch mit dem Wärmespeicher derart verschaltet ist, dass das in der Zuleitung und/oder in der Ableitung geführte Erdgas direkt mit dem Wärmespeichermedium des Wärmespeichers zum Wärmeaustausch in Kontakt geraten kann. Hierzu eignen sich insbesondere Wärmespeichermedien, die mit dem Erdgas im Wesentlichen nicht reagieren. Insbesondere eignet sich Wasser als ein solches Wärmespeichermedium. Nach Durchleiten des Erdgases durch Wasser wird dies nämlich insbesondere aufgrund des hohen Druckniveaus des Erdgases nur zu einem geringen Wassergehalt im Erdgas führen. Da jedoch Wasser typischerweise vor Einleiten des Erdgases in ein Erdgasleitungsnetz ohnehin abgetrennt wird, führt eine somit erforderliche Trocknung des Erdgases nach Durchleiten durch den mit Wasser gefüllten Wärmespeicher zu keinem Mehraufwand. Ausführungsgemäß ist insbesondere auch die geringe Grädigkeit zwischen dem Erdgas und dem Speichermedium (Wasser) vorteilhaft, um einen möglichst effizienten thermischen Energieaustausch zu erreichen.

Gemäß einer weiteren vorteilhaften Ausführungsform der Erfindung ist vorgesehen, dass der Wärmespeicher Wasser als Wärmespeichermedium aufweist. Wie bereits oben ausgeführt, eignet sich Wasser insbesondere bei Speichertemperaturen von weniger als 120 °C, bevorzugt bei Temperaturen von 90 bis 120 °C. Dieser Temperaturbereich entspricht jedoch dem typischen Temperaturbereich, bei welchem die Wärme bei Kompression des Erdgases vor Zuführung an den als Behältnis ausgebildeten Erdgasspeicher gewonnen wird. Alternativ ist jedoch auch möglich, das Wärmespeichermedium durch andere Substanzen zu ersetzen. Insbesondere eignen sich als Wärmespeichermedien Thermoöle, Salze, Salzhydrate oder auch andere Feststoffe wie Stein und Beton, die je nach Temperaturniveau, auf welchem der Wärmespeicher betrieben wird, auch in Ihrer Zusammensetzung variiert werden können. Die Kosten für die Bereitstellung dieser Wärmespeichermedien sind jedoch im Normalfall teurer als bei Wasser.

Gemäß einer weiteren vorteilhaften Ausführungsform ist vorgesehen, dass der Wärmespeicher eine erste elektrische Heizung aufweist, welche dazu ausgebildet ist, das in dem Wärmespeicher befindliche Wärmespeichermedium mit thermischer Energie zu versorgen. Hierbei wird die erste elektrische Heizung bevorzugt durch Aufnahme von Überschussstrom bei entsprechendem Angebot in den Stromübertragungsnetzen betrieben. Diese erste elektrische Heizung erlaubt den Wärmespeicher mit weiterer thermischer Energie zu versorgen, wenn solche in Form von elektrischer Energie etwa in den Stromübertragungsnetzen zur Verfügung steht. Ebenso ermöglicht diese erste elektrische Heizung den Wärmespeicher durch Zuführung von weiterer Wärme auf ein höheres Temperaturniveau anzuheben, um bspw. bei Expansion des Erdgases mittels des Expanders das entspannte Erdgas ebenfalls auf ein höheres Temperaturniveau zu bringen. Je nach Temperaturdifferenz zwischen entspanntem und nicht entspanntem Erdgas kann es etwa erforderlich sein, vermehrt Wärme dem Erdgas zuzuführen, um eine Abkühlung unterhalb einer kritischen Temperaturgrenze zu vermeiden.

Alternativ oder auch zusätzlich kann vorgesehen sein, dass das als Erdgasspeicher ausgebildete Behältnis eine zweite elektrische Heizung aufweist, welche dazu ausgebildet ist, das in dem Behältnis befindliche Erdgas mit thermischer Energie zu versorgen. Eine solche zweite elektrische Heizung ist insbesondere dann technisch sinnvoll vorzusehen, wenn das als Erdgasspeicher ausgebildete Behältnis gute thermische Isolationseigenschaften aufweist. Vergleichbar mit dem Betrieb der ersten elektrischen Heizung, kann auch die zweite elektrische Heizung besonders bevorzugt bei Angebot von Überschussstrom in den Stromübertragungsnetzen besonders effizient betrieben werden.

Alternativ oder auch zusätzlich zu einer elektrisch betriebenen Heizung kann auch vorgesehen sein, dass der Wärmespeicher mit einer ersten elektrisch betriebenen Wärmepumpe verschaltet ist, welche dazu ausgebildet ist, das in dem Wärmespeicher befindliche Wärmespeichermedium mit thermischer Energie zu versorgen. Ebenso ist es denkbar, dass das als Erdgasspeicher ausgebildete Behältnis mit einer zweiten elektrisch betriebenen Wärmepumpe verschaltet ist, welche dazu ausgebildet ist, das in dem Behältnis befindliche Erdgas mit thermischer Energie zu versorgen. Derartige Wärmepumpen erlauben die Nutzung von etwa industrieller oder kraftwerkstechnischer Abwärme auf einem relativ geringen Temperaturniveau, etwa von Temperaturen von weniger als 100°C, indem sie das Temperaturniveau dieser Abwärme geeignet thermisch anheben. Durch die elektrische Zusatzleistung zur Anhebung des Temperaturniveaus, welche den thermischen Gehalt der Niedertemperaturwärme und damit ihr Temperaturniveau deutlich erhöhen kann, kann eine Wärmepumpe besonders effizient zur Wärmebereitstellung genutzt werden. Eine derartige Wärmepumpe umfasst typischerweise einen elektrisch betriebenen Kompressor, eine Drossel sowie zwei Wärmetauscher. Wesentlich zur effizienten Bereitstellung von Wärme ist ein COP (coefficient of performance) von größer als 1.

Gemäß einer weiteren besonders bevorzugten Ausführungsform der Erfindung ist vorgesehen, dass das als Erdgasspeicher ausgebildete Behältnis bzw. das Erdgassystem wenigstens ein Ventil aufweist, über welches der Erdgasspeicher mit der Zuleitung und/oder die Ableitung fluidtechnisch verschaltet ist. Das Ventil ist hierbei bevorzugt am Kopf des als Erdgasspeicher ausgebildeten Behältnisses vorgesehen. Das Ventil erlaubt die Einstellung eines geeigneten Gegendrucks für den Kompressor bzw. eines geeigneten Eingangsdrucks für den Expander, um die Volumenströme geeignet einzustellen. Durch eine geeignete Ventilstellung kann so etwa auch das Temperaturniveau des Erdgases nach dem Kompressor bzw. nach dem Expander gezielt beeinflusst werden, und kann somit etwa auch zum Schutz vor Expansion auf ein Temperaturniveau unterhalb eines kritischen Temperaturwertes beitragen. Ebenso kann eine geeignete Ventilstellung zur Steigerung des Temperaturniveaus des Erdgases beitragen, während entsprechender Kompression. So kann etwa durch eine geeignete Ventilstellung die Temperatur des Erdgases während Kompression gezielt angehoben werden, um vermehrt Wärme in den Wärmespeicher übertragen zu können.

Entsprechend einer ersten bevorzugten Ausführungsform des erfindungsgemäßen Verfahrens ist vorgesehen, dass der Kompressor mehrzeitlich oder ausschließlich unter Benutzung von Überschussstrom betrieben wird. Überschussstrom betrifft hierbei, wie auch zuvor und nachfolgend die Strommenge, welche in Stromübertragungsnetzen, öffentlichen Stromversorgungsnetzwerken bzw. auch Kraftwerksnetzwerken anfällt. Aufgrund der Nutzung dieses Überschussstroms kann der Kompressor besonders kosteneffizient betrieben werden.

Gemäß einem weiteren Aspekt des erfindungsgemäßen Verfahrens kann auch vorgesehen sein, dass das Ventil gesteuert bzw. geregelt derart betrieben wird, dass das Erdgas bei Austreten aus dem Kompressor und/oder bei Austreten aus dem Expander einen vorbestimmten Temperaturbereich aufweist. Wie bereits weiter oben erklärt, kann so durch eine geeignete Ventileinstellung eine vorteilhafte Temperatursteuerung bzw. Temperaturregelung erfolgen. Besonders vorteilhaft erweist sich dieses Verfahren, wenn das Erdgassystem weiterhin Temperatursensoren aufweist, welche das Temperaturniveau des Erdgases nach Kompression bzw. nach Expansion messen. Mittels dieser so bestimmten Temperaturwerte kann eine vorteilhafte Steuerung bzw. Regelung der Ventilstellung erfolgen.

Nachfolgend soll die Erfindung anhand einzelner Figuren im Detail näher beschrieben werden. Hierbei ist darauf hinzuweisen, dass die Figuren lediglich schematisch zu verstehen sind und keinerlei Einschränkung hinsichtlich der Ausführbarkeit der Erfindung zur Folge haben können.

Weiterhin sei darauf hingewiesen, dass die in den Figuren dargestellten Einzelmerkmale für sich genommen wie auch in beliebiger Kombination mit weiteren technischen Merkmalen beansprucht werden, soweit der Gesamtgegenstand unter die Erfindungsidee fällt.

Ebenso sei darauf hingewiesen, dass die in den nachfolgenden Figuren mit Bezugszeichen versehenen technischen Merkmale, soweit durch gleiche Bezugszeichen versehen, auch gleiche oder ähnliche technische Funktionen und Wirkungsweisen aufweisen.

Hierbei zeigen:
- Figur 1: eine erste Ausführungsform des erfindungsgemäßen Erdgassystems 1 während eines Zustands der Zuleitung von Erdgas an das als Erdgasspeicher ausgebildete Behältnis 10;
- Figur 2: eine schematische Darstellung der in Figur 1 gezeigten Ausführungsform des Erdgassystems 1 während eines Zustands der Ableitung von Erdgas aus dem als Erdgasspeicher ausgebildeten Behältnis 10;
- Figur 3: eine schematische Darstellung einer weiteren Ausführungsform des erfindungsgemäßen Erdgassystems 1, bei welchem der Kompressor 30 und der Expander 35 durch eine funktionelle Baueinheit (Turbine) ersetzt sind;
- Figur 4: eine weitere Ausführungsform des erfindungsgemäßen Erdgassystems 1 während eines Zustands der Zuleitung von Erdgas an das als Erdgasspeicher ausgebildete Behältnis 10;
- Figur 5: eine schematische Darstellung der in Figur 4 gezeigten Ausführungsform des Erdgassystems 1 während eines Zustands der Ableitung von Erdgas aus dem als Erdgasspeicher ausgebildeten Behältnis 10;
- Figur 6: eine schematische Darstellung einer weiteren Ausführungsform des erfindungsgemäßen Erdgassystems 1, bei welchem der Kompressor 30 und der Expander 35 durch eine funktionelle Baueinheit (Turbine) ersetzt sind.
- Figur 7: eine schematische Darstellung einer ersten Ausführungsform des erfindungsgemäßen Verfahren zum Betrieb eines Erdgassystems 1;

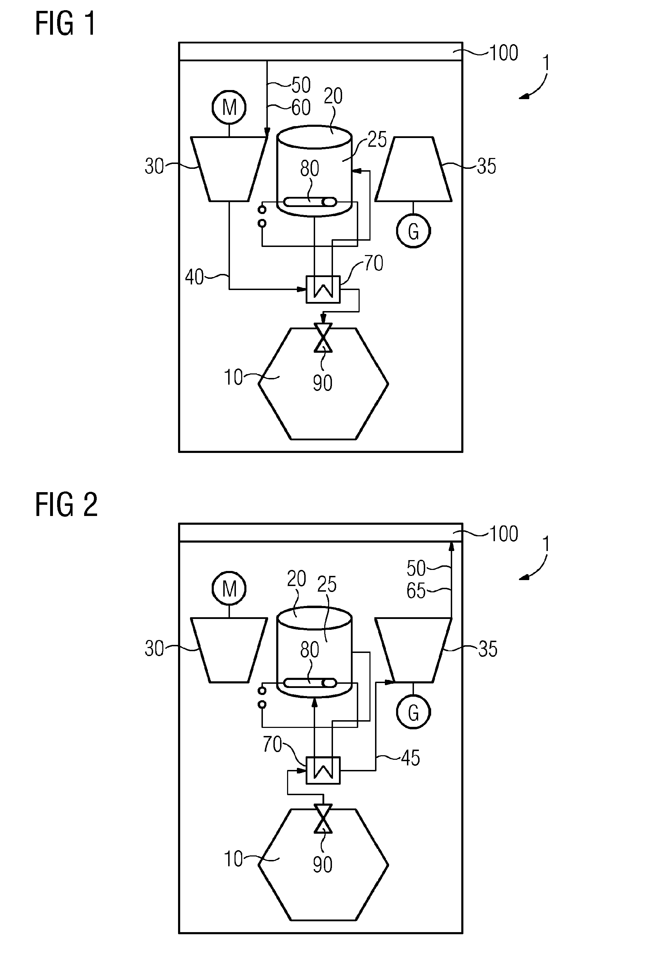

Figur 1 zeigt eine erste Ausführungsform des erfindungsgemäßen Erdgassystems 1, welches zu einem Zeitpunkt der Zuleitung von Erdgas aus einem Erdgasleitungsnetz 100 an das als Erdgasspeicher ausgebildete Behältnis 10 dargestellt ist. Das Erdgassystem 1 umfasst neben dem als Erdgasspeicher ausgebildeten Behältnis 10 einen Wärmespeicher 20, sowie einen Kompressor 30, der über einen elektrisch angetriebenen Motor (M) betrieben werden kann, sowie einen Expander 35, der mit einem Generator (G) derart mechanisch wechselwirken kann, dass bei Betrieb des Expanders 35 der Generator elektrische Energie erzeugt. Weiter umfasst das Erdgassystem 1 einen Wärmetauscher 70 mittels welchem aus einer Zuleitung 40 Wärme an den Wärmespeicher 20 übertragen werden kann.

Ausführungsgemäß wird einem Erdgasleitungsnetz 100 Erdgas über eine Zuführleitung 60 entnommen und dem Kompressor 30 zugeführt. Die Zuführleitung 60 ist hierbei Teil eines Anschlusses 50, welcher das ausführungsgemäße Erdgassystem 1 mit dem Erdgasleitungsnetz 100 fluidtechnisch verbindet. Bei Betrieb des Kompressors 30 mittels des Elektromotors (M) wird das so entnommene Erdgas auf ein höheres Druckniveau komprimiert und über die Zuleitung 40 dem als Erdgasspeicher ausgebildeten Behältnis 10 zur zeitlichen Zwischenspeicherung zugeleitet. Aufgrund der im Wesentlichen adiabatischen Kompression weist das auf ein höheres Druckniveau komprimierte Erdgas ein höheres Temperaturniveau auf. Mittels des Wärmetauschers 70 kann so Wärme aus der Zuleitung 40 aus dem Erdgas entnommen werden, um diese auf einem entsprechenden Temperaturniveau dem Wärmespeicher 20 zuzuführen und darin zwischenzuspeichern. Das so thermisch konditionierte Erdgas kann anschließend dem als Erdgasspeicher ausgebildeten Behältnis 10 folglich bei geringerem Wärmeinhalt zugeleitet werden. Hierbei hat das Erdgas das Ventil 90 zu durchströmen, welches den Kompressionsgegendruck bestimmt.

Um den Wärmeinhalt innerhalb des Wärmespeichers 20 zusätzlich zu erhöhen, ist ausführungsgemäß eine elektrisch betriebene erste Heizung 80 vorgesehen, die insbesondere mittels Nutzung von Überschussstrom betrieben werden kann. Demgemäß kann auch die als Überschussstrom verfügbare elektrische Energie in thermische Energie überführt werden und zwischenzeitlich in dem Wärmespeicher 20 gespeichert werden. Diese elektrisch betriebene erste Heizung 80 kann auch durch eine erste elektrisch betriebene Wärmepumpe 85 ersetzt bzw. ergänzt sein.

Figur 2 zeigt das in Figur 1 dargestellte Erdgassystem 1 zu einem Zeitpunkt, zu welchem das in dem als Erdgasspeicher ausgebildete Behältnis 10 befindliche Erdgas wieder dem Erdgasleitungsnetz 100 zugeführt wird. Die Zuführung erfolgt von einem verhältnismäßig höheren Druckniveau in dem als Erdgasspeicher ausgebildete Behältnis 10 auf ein verhältnismäßig geringeres Druckniveau in dem Erdgasleitungsnetz 100. Zur Druckreduzierung dient der Expander 35 als Druckeinstellmittel. Um jedoch zu verhindern, dass das in dem Expander 35 entspannte Erdgas unterhalb eines kritischen Temperaturwertes abgekühlt wird, wird dem Erdgas vor Zuleitung an den Expander 35 über den Wärmetauscher 70 entsprechend Wärme zugeführt. Die Wärmezufuhr dient dazu, das in der Ableitung 45 befindliche Erdgas vor Entspannung durch den Expander 35 auf einen höheren Wärmegehalt zu konditionieren. Demgemäß weist auch das Erdgas nach Entspannung mittels des Expanders 35 ein verhältnismäßig höheres Temperaturniveau in einer Abführleitung 65 auf, welche dazu ausgebildet ist, das Erdgas dem Erdgasleitungsnetz 100 zuzuführen. Die Abführleitung 65 ist wiederum Teil des Anschlusses 50, welcher das Erdgassystem 1 mit dem Erdgasleitungsnetz 100 fluidtechnisch verbindet.

Während der Entspannung des Erdgases über den Expander 35 erfolgt gleichzeitig ein Betrieb des Generators (G), wobei elektrische Energie erzeugt wird, die den Stromübertragungsnetzen wiederum zur Verfügung gestellt werden kann.

Ausführungsgemäß ist vorgesehen, das als Erdgasspeicher ausgebildete Behältnis 10 bis zu einem Druck von etwa 200 bar mit Erdgas anzufüllen. Gleichzeitig weist das Erdgasleitungsnetz 100 einen Erdgasdruck von etwa 80 bar auf. Aufgrund des Druckunterschiedes (aber auch weiterer Größen des Fluidleitungssystems) kann so Wärme auf einem Temperaturniveau mittels Kompression gewonnen werden, die im Bereich von 100 °C vorliegt. Bei diesem Temperaturniveau kann die Wärme besonders günstig in einem Wärmespeicher 20 zwischengespeichert werden, der Wasser als Wärmespeichermedium aufweist.

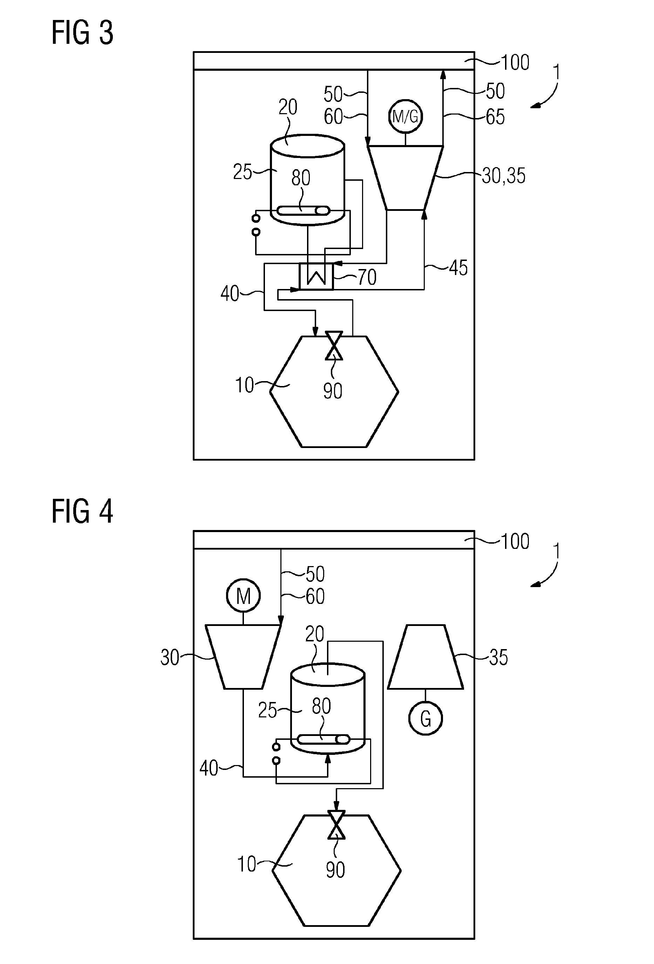

Figur 3 zeigt eine weitere Ausführungsform des erfindungsgemäßen Erdgassystems 1, vergleichbar der in Fig.l und Fig. 2 gezeigten Ausführungsform, wobei jedoch der Kompressor 30 und der Expander 35 als eine Turbine ausgeführt sind. Diese Turbine vermag mit einem auch als Generator (G) betreibbaren Elektromotor (M) wechselzuwirken, um je nach Fahrweise entweder als Kompressor 30 (Betrieb des Elektromotors) oder auch als Expander 35 (Betrieb als Generator) eingesetzt zu werden. Aufgrund der baulichen Vereinheitlichung zweier Funktionsbauteile in einem einzigen Bauteil ergibt sich so eine besonders günstige und investitionsarme technische Lösung. Die Funktion des in Figur 3 gezeigten Erdgassystem 1 unterscheidet sich hierbei im Wesentlichen nicht grundlegend von den in Figur 1 und Figur 2 gezeigten Teilfunktionen.

Figur 4 zeigt eine weitere Ausführungsform des erfindungsgemäßen Erdgassystems 1, welche sich von der in Figur 1 und 2 gezeigten Ausführungsform lediglich dahingehend unterscheidet, dass zur wärmetechnischen Verschaltung zwischen Zuleitung 40 und Wärmespeicher 20 kein Wärmetauscher 70 vorgesehen ist. Vielmehr erlaubt die vorliegende Ausführungsform einen direkten Wärmeaustausch zwischen dem in der Zuleitung 40 befindlichen Erdgas mit dem in dem Wärmespeicher 20 befindlichen Wärmespeichermedium 25. Das Erdgas wird insofern durch den Wärmespeicher 20 geströmt und ermöglicht den direkten Kontakt mit dem Wärmespeichermedium 25. Hierbei eignet sich insbesondere, wie weiter oben ausgeführt, Wasser als Wärmespeichermedium 25, da dieses einerseits mit dem Erdgas im Wesentlichen nicht chemisch reagiert, andererseits nach Entnahme des Erdgases aus dem als Erdgasspeicher ausgebildeten Behältnis 10 ohnehin zur Trocknung des Erdgases abgetrennt wird (vorliegend nicht gezeigt).

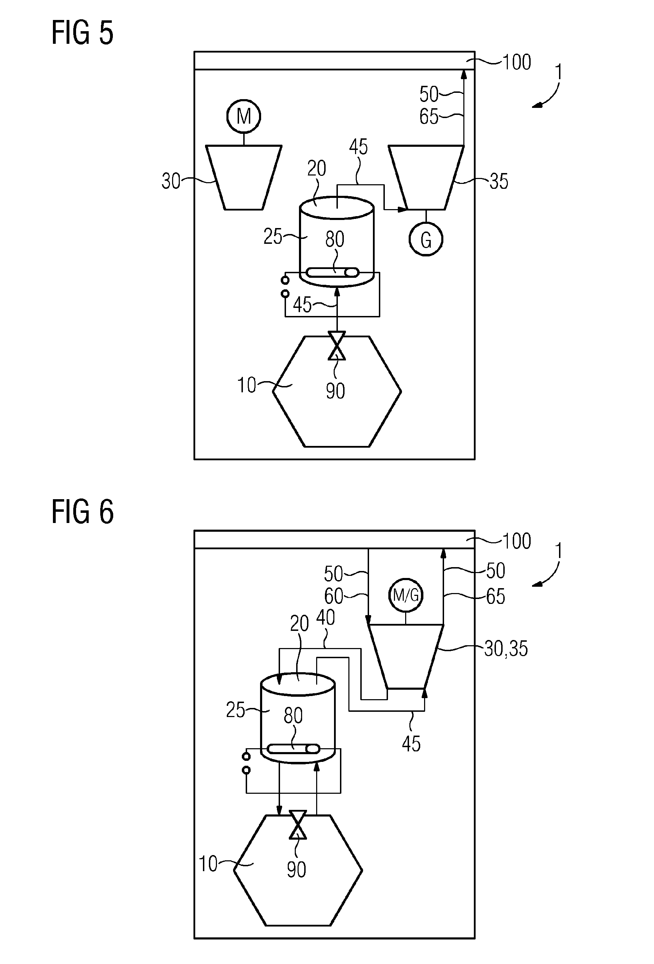

Figur 5 zeigt die in Figur 4 dargestellte Ausführungsform des erfindungsgemäßen Erdgassystems 1, jedoch zu einem Zeitpunkt der Ableitung von Erdgas aus dem als Erdgasspeicher ausgebildeten Behältnis 10. Wie in Figur 4 bereits dargestellt, wird das aus dem Erdgasspeicher 1 ausgebildete Behältnis 10 entnommene Erdgas wiederum durch den Wärmespeicher geströmt, wobei erneut ein direkter Wärmeübertrag zwischen dem Wärmespeichermedium 25 und dem Erdgas erfolgen kann. Insofern weist auch die in Figur 5 gezeigte Ausführungsform der Erfindung keinen Wärmetauscher 70 auf, welcher mit der Ableitung 45 verschaltet wäre. Dennoch ist es möglich, einen Wärmetauscher vorzusehen, wobei etwa der Wärmetauscher selektiv beim Befüllen des als Erdgasspeicher ausgebildeten Behältnisses 10 oder bei Entnahme des Erdgases daraus verwendet werden kann.

Figur 6 zeigt eine weitere Ausführungsform des erfindungsgemäßen Erdgassystems 1, wobei sich diese Ausführungsform wiederum von der in Figur 3 gezeigten Ausführungsform lediglich dahingehend unterscheidet, dass kein durch den Wärmetauscher 70 vermittelter Wärmeübertrag zwischen dem in Zuleitung 40 bzw. Ableitung 45 geführten Erdgas und dem Wärmespeicher 20 erfolgt, sondern ein direkter Wärmeübertrag indem das in Zuleitung 40 bzw. Ableitung 45 geführte Erdgas direkt mit dem in dem Wärmespeicher 20 befindlichen Wärmespeichermedium 25 in Kontakt geraten kann.

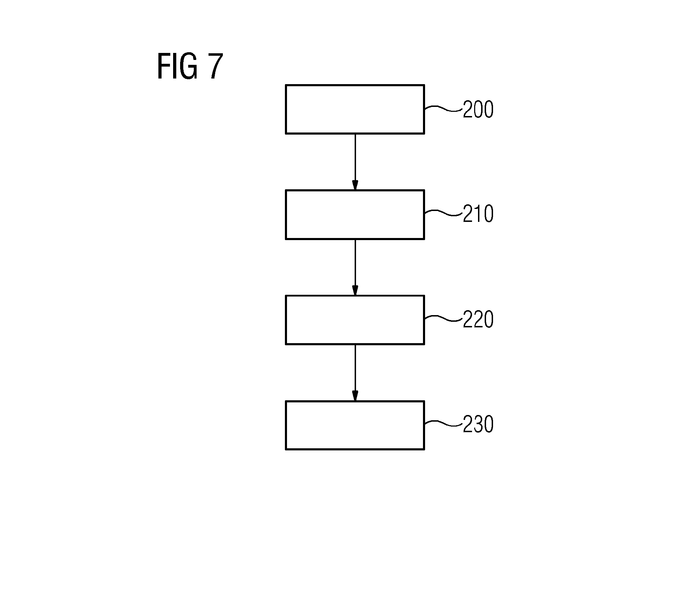

Figur 7 zeigt eine erste Ausführungsform des erfindungsgemäßen Verfahrens zum Betrieb eines Erdgassystems 1 gemäß einem der vorher beschriebenen Ausführungsformen, welches mit einem Erdgasleitungsnetz 100 betriebsgemäß verschaltet ist, wobei das Verfahren folgende Schritte umfasst:
- Betreiben des Kompressors 30 und Zuleiten von Erdgas aus dem Erdgasleitungsnetz 100 an das als Erdgasspeicher ausgebildete Behältnis 10 (Verfahrensschritt 200);
- Übertragen von bei der Kompression erzeugter Wärme zur zeitlichen Zwischenspeicherung an den Wärmespeicher 20 (Verfahrensschritt 210);
- Abrufen von Wärme aus dem Wärmespeicher 20 und Übertragen dieser Wärme auf aus dem als Erdgasspeicher ausgebildeten Behältnis 10 abgeleitetes Erdgas (Verfahrensschritt 220);
- Betreiben des Expanders 35 und Zuleiten des erwärmten Erdgases an das Erdgasleitungsnetz 100 (Verfahrensschritt 230).

Weitere Ausführungsformen ergeben sich aus den Unteransprüchen.

## Patentansprüche

1. Erdgassystem (1), umfassend ein als Erdgasspeicher ausgebildetes Behältnis (10), einen mit einem Wärmespeichermedium (25) versehenen Wärmespeicher (20), sowie einen elektrisch angetriebenen Kompressor (30) und einen Expander (35), wobei der Kompressor (30) mit dem als Erdgasspeicher ausgebildeten Behältnis (10) über eine Zuleitung (40) fluidtechnisch verschaltet ist, und wobei der Expander (35) mit dem als Erdgasspeicher ausgebildeten Behältnis (10) über eine Ableitung (45) fluidtechnisch verschaltet ist, und wobei die Zuleitung (40) und die Ableitung (45) mit dem Wärmespeicher (20) wärmetechnisch gekoppelt sind.

2. Erdgassystem gemäß Anspruch 1,
**dadurch gekennzeichnet, dass** weiterhin wenigstens ein Anschluss (50) umfasst ist, welcher dazu ausgebildet ist, eine fluidtechnische Verbindung zwischen dem Erdgassystem (1) und einem Erdgasleitungsnetz (100) herzustellen.

3. Erdgassystem gemäß einem der vorhergehenden Ansprüche, **dadurch gekennzeichnet, dass** der Kompressor (30) als wenigstens eine, mittels eines Elektromotors betriebene Turbine ausgebildet ist.

4. Erdgassystem gemäß einem der vorhergehenden Ansprüche, **dadurch gekennzeichnet, dass** der Expander (35) als wenigstens eine mit einem Generator zur Stromerzeugung wechselwirkende Turbine ausgebildet ist.

5. Erdgassystem gemäß einem der vorhergehenden Ansprüche, **dadurch gekennzeichnet, dass** der Kompressor (30) und der Expander (35) durch eine Turbine ausgebildet sind, die in unterschiedlichen Richtungen betrieben werden kann, wobei der den Kompressor (30) antreibende Elektromotor auch als Generator für den Betrieb als Expander (35) arbeiten kann.

6. Erdgassystem gemäß einem der vorhergehenden Ansprüche, **dadurch gekennzeichnet, dass** das als Erdgasspeicher ausgebildetes Behältnis (10) ein Druckbehältnis ist, welches mit Erdgas bei einem Überdruck beladen werden kann, insbesondere bei einem Überdruck, welcher größer ist als der Druck in einem herkömmlichen Erdgasleitungsnetz, bevorzugt bei einem Überdruck von wenigstens 100 bar, wenigstens 150 bar oder besonders bevorzugt bei einem Überdruck von wenigstens 200 bar.

7. Erdgassystem gemäß einem der vorhergehenden Ansprüche, **dadurch gekennzeichnet, dass** weiter ein Wärmetauscher (70) vorgesehen ist, welcher mit der Zuleitung (40) und/oder der Ableitung (45) wärmetechnisch verschaltet ist, und gleichzeitig mit dem Wärmespeicher (20) wärmetechnisch verschaltet ist.

8. Erdgassystem gemäß einem der vorhergehenden Ansprüche 1 bis 6,
**dadurch gekennzeichnet, dass** die Zuleitung (40) und/oder die Ableitung (45) fluidtechnisch mit dem Wärmespeicher (20) derart verschaltet ist, dass das in der Zuleitung (40) und/oder der Ableitung (45) geführte Erdgas direkt mit dem Wärmespeichermedium (25) des Wärmespeichers (20) zum Wärmeaustausch in Kontakt geraten kann.

9. Erdgassystem gemäß einem der vorhergehenden Ansprüche, **dadurch gekennzeichnet, dass** der Wärmespeicher (20) Wasser als Wärmespeichermedium (25) aufweist.

10. Erdgassystem gemäß einem der vorhergehenden Ansprüche, **dadurch gekennzeichnet, dass** der Wärmespeicher (20) eine erste elektrische Heizung (80) aufweist, welche dazu ausgebildet ist, das in dem Wärmespeicher (20) befindliche Wärmespeichermedium (25) mit thermischer Energie zu versorgen.

11. Erdgassystem gemäß einem der vorhergehenden Ansprüche, **dadurch gekennzeichnet, dass** der Wärmespeicher (20) mit einer ersten elektrisch betriebenen Wärmepumpe (85) verschaltet ist, welche dazu ausgebildet ist, das in dem Wärmespeicher (20) befindliche Wärmespeichermedium (25) mit thermischer Energie zu versorgen.

12. Erdgassystem gemäß einem der vorhergehenden Ansprüche, **dadurch gekennzeichnet, dass** das als Erdgasspeicher ausgebildete Behältnis (10) bzw. das Erdgassystem (1) wenigstens ein Ventil (90) aufweist, über welches der Erdgasspeicher mit der Zuleitung (40) und/oder der Ableitung (45) fluidtechnisch verschaltet ist.

13. Verfahren zum Betrieb eines Erdgassystems gemäß einem der vorhergehenden Ansprüche, welches mit einem Erdgasleitungsnetz (100) betriebsgemäß verschaltet ist, wobei das Verfahren die folgenden Schritte umfasst:
- Betreiben des Kompressors (30) und Zuleiten von Erdgas aus dem Erdgasleitungsnetz (100) an das als Erdgasspeicher ausgebildete Behältnis (10);
- Übertragen von bei der Kompression erzeugter Wärme zur zeitlichen Zwischenspeicherung an den Wärmespeicher (20);
- Abrufen von Wärme aus dem Wärmespeicher (20) und Übertragen dieser Wärme auf aus dem als Erdgasspeicher ausgebildeten Behältnis (10) abgeleitetes Erdgas;
- Betreiben des Expanders (35) und Zuleiten des erwärmten Erdgases an das Erdgasleitungsnetz (100).

14. Verfahren gemäß Anspruch 13,
**dadurch gekennzeichnet, dass** der Kompressor (30) mehrzeitlich oder ausschließlich unter Benutzung von Überschussstrom betrieben wird.

15. Verfahren gemäß Anspruch 13 oder 14,
**dadurch gekennzeichnet, dass** das Ventil (90) gesteuert bzw. geregelt derart betrieben wird, dass das Erdgas bei Austreten aus dem Kompressor (30) und/oder bei Austreten aus dem Expander (35) einen vorbestimmten Temperaturbereich aufweist.
